# EUROPÄISCHE PATENTSCHRIFT

(11) **EP 0 374 654 B1**
(45) Veröffentlichungstag und Bekanntmachung des Hinweises auf die Patenterteilung: **25.01.1995**
(21) Anmeldenummer: 89122772.0
(22) Anmeldetag: 09.12.1989
(51) Int. Cl.: C08K 5/00, C08L 29/04, C09K 19/60

(54) **Wässrige Giesslösungen zur Herstellung lichtpolarisierender Folien oder Filme auf Polyvinylalkohol-Basis**
Aqueous casting solutions for the production of light-polarising foils or films based on polyvinyl alcohol
Solution de coulée à base de polyvinyl alcool pour la préparation de films ou feuilles polarisants

(30) Priorität: 23.12.1988 DE 3843415; 01.07.1989 DE 3921668
(43) Veröffentlichungstag der Anmeldung: 27.06.1990
(73) Patentinhaber: BAYER AG, 51368 Leverkusen (DE)
(72) Erfinder: Claussen, Uwe, Dr., D-5090 Leverkusen 3 (Opladen) (DE); Kröck, Friedrich W., Dr., D-5068 Odenthal (DE)

(56) Entgegenhaltungen:
- DATABASE CHEMICAL ABSTRACTS, (HOST:STN), 1988, ref. Nr. 112(12): 100242e,Columbus, Ohio, US; & PL-A-145 151

## Beschreibung

Die Erfindung betrifft wäßrige Gießlösungen zur Herstellung lichtpolarisierender Folien oder Filme auf Polyvinylalkohol-Basis.

Es ist bekannt, ganz oder teilverseiftes Polyvinylacetat mit dichroitischen Chromophoren zu versetzen, um daraus Polarisationsfolien herzustellen.

Technische Verwendung haben bislang ganz überwiegend die iod-haltigen Polarisatoren auf der Basis von Polyvinylalkohol-Folien gefunden, die beispielsweise in den passiven Flüssigkristall-Displays zur Sichtmarmachung der Information eingesetzt werden. Das wirksame Agens dieser Filme ist der Iod-Polyvinylalkohol-Komplex [M. M. Zwick, J. Appl. Polym. Sci.; 9,2393-2424 (1965)], der das Tageslicht zwar breitbandig, aber nicht vollständig absorbiert. Im kurzwelligen (orange-gelben) Bereich ist ein "Loch", d.h. ein Bereich verminderter Extinktion, weswegen die Folien eine blaue Eigenfarbe zeigen.

Eine wichtige kritische Größe eines Displays ist die Ablesbarkeit bei verschiedenen Beleuchtungsverhältnissen, sie wird üblicherweise als "Perceived contrast ratio" (PCR) angegeben. Aus diesem folgt, daß die Transmission einerseits in der Sperrstellung so klein wie möglich (Ablesbarkeit bei Dunkelheit), andererseits in der Durchgangsstellung so groß wie möglich (Ablesbarkeit bei Helligkeit) gemacht werden muß. Dies erfordert eine ganz gleichmäßige, möglichst hohe Polarisationsleistung des Filters über den gesamten spektralen Bereich, welche mit der Iodfolie prinzipiell nicht erreicht werden kann.

Es hat nicht an Versuchen gefehlt, Iod durch Farbstofftripel dichroitischer Farbstoffe zu ersetzen, um ein Neutralgrau mit gleichmäßigem Dichroismus zu erzeugen. Hierzu ist nicht nur eine Gamme leistungsfähiger Farbstoffe notwendig, sondern auch ein Verfahren, um den im Molekül vorhandenen Dichroismus wirksam werden zu lassen.

Bei dem gewöhnlich verwendeten Iod färbt man auf konventionelle Art und Weise eine zuvor gereckte Polyvinylalkoholfolie an, wobei der Ordnungszustand des Polymers durch den Chromophor abgebildet wird. Der Ordnungszustand wird gewöhnlich durch das dichroitische Verhältnis (DV) A∥/A⊥ angegeben, wobei A∥ die Extinktion im Sperrzustand, A⊥ die Extinktion im Offenzustand bedeuten (G. Baum: Optical Engineering 16, 291, 1977).

Das gleiche Färbeverfahren läßt sich in Gegenwart dichroitischer Farbstoffe anwenden, wobei man nur mäßige Ordnungsgrade erreicht (US-4 514 559).

Die alternative Möglichkeit besteht darin, die ungereckte Folie mit dem Farbstoff zu versehen. Entweder geht man von einer ungereckten Polyvinylalkohol-Folie aus (JP 61-255 304), oder man färbt das Polymer in der Masse an. Letzteres ist wegen der Temperaturempfindlichkeit des Polyvinylalkohols nur durch Zugabe eines Farbstoffs zu einer Lösung des Polymeren möglich. Bei dem Lösungsmittel handelt es sich gewöhnlich um Wasser oder wasserhaltige Mischungen org. Lösungsmittel (EP 160 113, US 4 774 141). Man erhält nach dem Gießen gefärbte Folien, die gereckt dichroitisch sind. Allerdings ist der so erzielte Dichroismus für eine technische Verwendung nicht ausreichend hoch.

Der Polyvinylalkoholfilm ist wasserfrei steif, zäh und relativ hart. Es ist bekannt, daß Zusätze von Verbindungen mit hydrophilen, stark polaren Gruppen weichmachende Eigenschaften haben. So sind Versuche bekannt geworden, durch Zusätze von 5 - 17 Gew.-% Glycerin, bezogen auf die Summe der Gewichte von Glycerin und Polyvinylalkohol, die Eigenschaften zu beeinflussen. (Derwent 32 063 D/18, Derwent 86-257 411/39, US-PS 4 440 541).

Indessen lieferten alle Herstellungsvarianten bisher nur mäßige dichroitische Ergebnisse, weswegen sich die Polarisationsfolien auf der Basis von Farbstoffen gegen die Iodfolie bisher nicht durchsetzen konnten, obgleich sie bei Wärme- oder Feuchteeinwirkung deutlich beständiger als die Iodfolien sind. Es sind keine Versuchsergebnisse bekannt geworden, in denen über die Veränderung des Dichroismus der Farbstoffe in der Matrix durch Zusatzstoffe berichtet wird.

Es wurde nun überraschenderweise gefunden, daß sich die erfindungsgemäßen Gießlösungen zur Herstellung farbstoffhaltiger lichtpolarisierender Folien oder Filme auf Polyvinylalkohol-Basis eignen, die einen verstärkten Dichroismus der Farbstoffe in der Matrix aufweisen.

Die Gießlösungen zur Herstellung lichtpolarisierender Filme oder Folien enthalten, bezogen auf die Summe der Gewichte (A) + (B) + (C) + (D) = 100 Gew.-%, (A) 30-95 Gew.-%, vorzugsweise 40-75 Gew.-%, Wasser, (B) 1-40 Gew.-%, vorzugsweise 4-30 Gew.-%, Vinylalkoholpolymer, (C) 0.01-5 Gew.-%, vorzugsweise 0.02-2 Gew.-%, eines dichroitischen Farbstoffes, der in Form der freien Säure der Formel 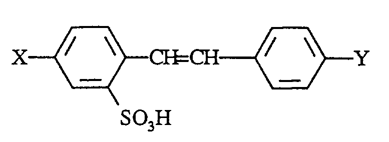
entspricht, in der
- X, Y: -N=N-R, -CF₃, -CONH₂, -CONHR¹, -CONR¹R², -COOH, -COOR¹, -CN, -NH₂, -NHR¹, -NR¹R², -OH, -OR¹, -NHCOR¹, Halogen, -OCOR₁, NO₂ oder einen gegebenenfalls substituierten heterocyclischen Rest,
- R: einen Aryl- oder heterocyclischen Rest, vorzugsweise den Rest einer carbocyclisch aromatischen oder heterocyclischen Kupplungskomponente, vorzugsweise der Benzol-, Naphthalin- oder Pyrazolon-Reihe
und
- R¹, R²: gegebenenfalls durch O und/oder S unterbrochenes Alkyl, Cycloalkyl, Aryl oder Aralkyl, wobei die für R, R¹ und R² genannten Reste substituiert sein können, bezeichnen, mit der Maßgabe, daß wenigstens ein Rest X oder Y eine Gruppe der Formel -N=N-R ist,
(D) 0.5-50 Gew.-% einer oder mehrerer Verbindungen aus der Reihe Glycerin, Ethylenglykol, Trimethylolethan, Trimethylolpropan, Tetramethylolethan, Sorbit, Mannit, Diethylenglykol, Triethylenglykol, Ethylenglykolmono- und -dimethylether, Ethylenglykolmono- und diethylether, Diethylenglykolmono- und -dimethylether, Diethylenglykolmono- und diethylether, Propanolamin, Ethanolamin, N,N-Dimethylformamid, Acetamid, N-Methylpyrrolidon, Pyrrolidon, ε-Caprolactam, Methanol, Ethanol, Propanol, wobei bei Verwendung von Glycerin allein das Gewichtsverhältnis Glycerin : Vinylalkoholpolymer etwa 0.2-1:1 beträgt.

Bei den eingesetzten Polyvinylalkoholen handelt es sich vorzugsweise um Polymere, die durch vollständige oder teilweise Verseifung von Polyvinylacetat hergestellt worden sind, insbesondere um Typen, die in 4 %iger wäßriger Lösung eine Viskosität > 4 m Pa.sec² bei 20°C, vorzugsweise 20 - 70 m Pa.sec² bei 20°C, und einem Verseifungsgrad > 80 Mol-%, vorzugsweise 85 - 100 Mol-%, aufweisen.

Die Farbstoffe werden vorzugsweise in solchen Konzentrationen eingesetzt, daß die erhaltenen Filme oder Folien, bezogen auf das Polymer, 0,025 - 10 Gew.-%, besonders bevorzugt 0,5 - 6 Gew.-%, Farbstoff und 1-20 % Glycerin enthalten.

Besonders bevorzugt ist der Einsatz von Gemischen, insbesondere von Gemischen, die Glycerin enthalten, wie Glycerin-DMF-, Glycerin-Methanol-, Glycerin-Ethylenglykolmonomethylether-sowie Glycerin-Ethylenglykoldimethylether-Gemischen.

Nach dem Gießen werden die Filme oder Folien bei Raumtemperatur oder erhöhter Temperatur (80 - 160°C, vorzugsweise 120 - 140°C) im Verhältnis 1 : 2 bis 1 : 10, vorzugsweise 1 : 4 bis 1 : 8, uniaxial verstreckt.

Die hergestellten lichtpolarisierenden Filme oder Folien haben vorzugsweise eine Dicke von 10 - 150 µ.

Gewünschtenfalls können die farbstoffhaltigen Filme auch einer Nachbehandlung, z.B. mit wäßriger Borsäurelösung, zwecks Verbesserung der Lichtdurchlässigkeit oder des Polarisationskoeffizienten unterworfen werden. Die Bedingungen, unter denen diese Nachbehandlung durchgeführt wird, können abhängig vom Filmmaterial und Farbstoff schwanken. Vorzugsweise arbeitet man mit einer 1-15 gew.-%igen, besonders bevorzugt 5-10 gew.-%igen, Borsäurelösung bei 30-80°C, besonders bevorzugt 50-80°C. Vorzugsweise setzt man der Borsäurelösung Tenside und gegebenenfalls anorganische Salze zu. Die Tenside können nicht-ionisch, kationisch oder anionisch sein; bevorzugt sind sie nicht-ionisch. Beispiele für nicht-ionische Tenside sind: Additionsprodukte vom Ethylenoxid an höhere Alkohole oder Additionsprodukte vom Ethylenoxid an Nonylphenol. Vorzugsweise verwendet man, bezogen auf Wasser, 0,005 -0,5 Gew.-%, besonders bevorzugt 0,02 -0,2 Gew.-% Tensid. Als anorganische Salze kommen vorzugsweise Natriumsulfat und weiterhin Kaliumsulfat, Natriumchlorid, Kaliumchlorid, Natriumnitrat, Kaliumnitrat in Betracht. Bezogen auf Wasser, werden vorzugsweise 0,1 - 5 Gew.-%, besonders bevorzugt 0,3 -3 Gew.-%, anorganische Salze eingesetzt. Gewünschtenfalls kann noch eine Fixierungsbehandlung mit einer wäßrigen Lösung einer hochmolekularen kationischen Verbindung vorgenommen werden.

Die lichtpolarisierenden Filme oder Folien können in an sich bekannter Weise mit anderen Materialien compoundiert oder laminiert werden. Als Schutzüberzug eignen sich z.B. Folien aus einem Tetrafluorethylen-Hexafluorethylen Copolymer oder einem anderen Fluorkohlenwasserstoff-Harz, einem Polyester-, Polyolefin- oder Polyamid-Harz, bevorzugt Celluloseester, insbesondere -(tri)-acetat, -propionat, -butyrat, Polycarbonat.

### Beispiel 1

0,05 g salz- und stellmittelfreier Farbstoff der Formel (B) 4,95 g ®Mowiol 28-99 (verseiftes Polyvinylacetat; Verseifungsgrad 99,4 ± 0,4 Mol-%; Viskosität der 4 %igen wäßrigen Lösung bei 20°C = 28 ± 2,0 m Pa.sec²; Hersteller; Hoechst AG) werden in 95 g Wasser klar gelöst. Zu dieser Lösung gibt man die in der Tabelle 1 angegebenen Mengen Additiv hinzu und mischt intensiv. Die Mischung wird mit einem Rakel auf einer Glasplatte in 500 µ dicker Schicht aufgezogen und nach dem Trocknen und Ablösen von der Unterlage bei 130°C um 700 % gereckt.

Man erhält dichroitische Verhältnisse (DV), welche die der ohne Zusatz hergestellten Folien deutlich übertreffen.

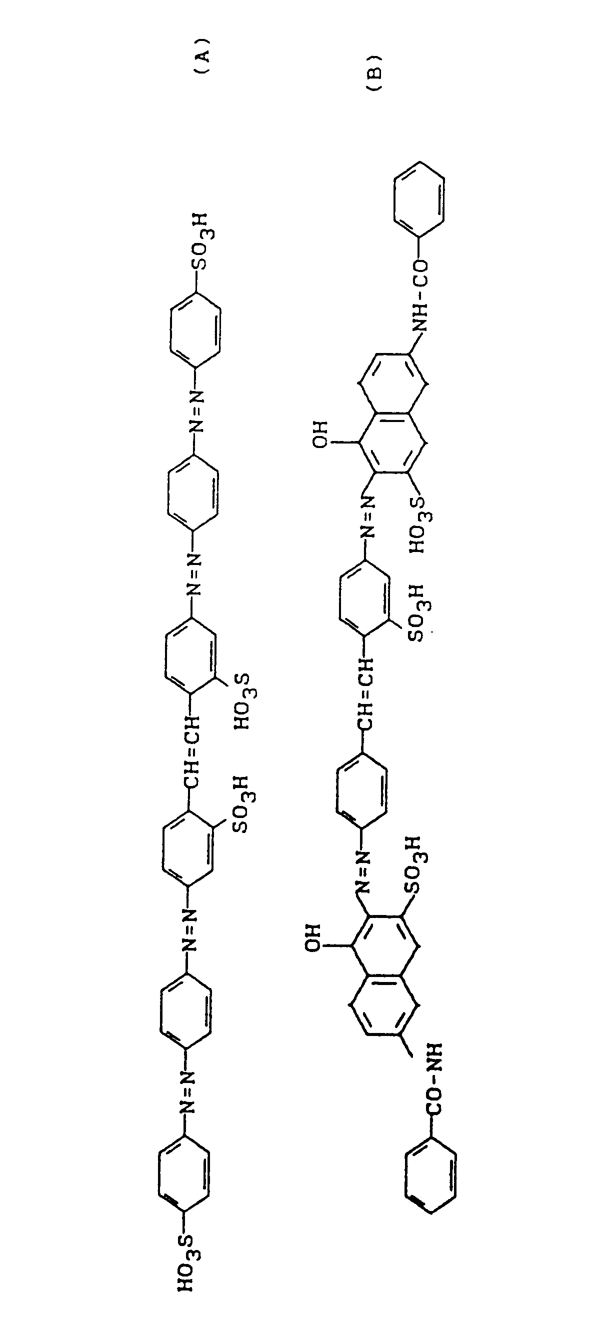

**Tabelle 1**

| Farbstoff | g Zusatz |
|---|---|
| A | 5 Methanol + 2,5 Glycerin |
| B | 5 Methanol + 2,5 Glycerin |

### Beispiel 2

0,2 g des Farbstoffs (B) (s. Beispiel 1) löst man in 100 g heißem Wasser auf. Zu dieser Lösung gibt man 10 g Glycerin und läßt erkalten. In die erkaltete Lösung trägt man 19,8 g ®Mowiol 28-99 unter Rühren ein. Nach einstündigem Rühren bei Raumtemperatur erhitzt man auf 90°C und rührt so lange bei dieser Temperatur bis nach ca. 4 Stunden eine homogene Mischung entstanden ist. Bei 50°C rührt man dann langsam 5 g Methanol ein. Die warme Lösung wird durch eine Filterpresse unter Aufpressen von Luft filtriert und danach durch kurzzeitges Evakuieren entgast. Die Gießlösung ist bei 60-70°C gießfähig und haltbar. Zur Erzeugung einer Folie wird die 60-70°C warme Gießlösung mit einem 500 µ-Rakel auf eine auf ca. 50°C vorgewärmte Unterlage, (Glas, hydrophilierte PE-Folie etc.) aufgetragen und die erhaltene Schicht dann getrocknet. Man erhält einen ca. 37 µ dicken Film, der abgezogen werden kann, Nach Recken der Folie bei 130°C um 740 % ergibt sich eine Folie, die 13,6 µ dick ist und ein dichroitisches Verhältnis von 37,8 zeigt.

Alternativ kann die obige 60-70° warme Lösung aus einer Gießvorrichtung mit einer Schichtdicke von ca. 120 µ auf eine auf ca. 50°C vorgewärmte, rotierende Trommel (Durchmesser ca. 20 cm) aufgegossen werden, Nach einer Umdrehung ist die Folie trocken und kann kontinuierlich abgezogen werden; sie ist ca. 20-30 µ dick, Nach Reckung bei 130°C erhält man eine Folie von 14,5 µ mit einer dichroitischen Verhältnis von 35,2.

### Beispiel 3

0,64 g Farbstoff der in Beispiel 1 angegebenen Formel (B) und 0,64 g Farbstoff der Formel (A) werden in einer Mischung aus 220 ml Wasser, 40 g Glycerin und 200 g Methanol in der Wärme gelöst. Man gibt danach 52 g ®Mowiol 28-99 unter Rühren hinzu und hält die Mischung einige Stunden auf 60-70°C, Nach Filtrieren wird die warme Lösung mit einem 500 µ-Rakel auf eine ca. 50°C vorgewärmte Unterlage aufgetragen und die Schicht getrocknet. Die tiefrubinrote Folie hat nach dem Recken eine Dicke von 24 µ und im sichtbaren Teil des Spektrums zwischen 400 nm und 630 nm ein dichroitisches Verhältnis >20 bis 35 bei einer optischen Dichte von ca. 6 im absorbierenden Zustand.

## Patentansprüche

1. Gießlösungen zur Herstellung lichtpolarisierender Filme oder Folien enthaltend, bezogen auf die Summe der Gewichte (A) + (B) + (C) + (D) = 100 Gew.-%, (A) 30-95 Gew.-%, vorzugsweise 40-75 Gew.-%, Wasser, (B) 1-40 Gew.-%, vorzugsweise 4-30 Gew.-%, Vinylalkoholpolymer, (C) 0.01-5 Gew.-%, vorzugsweise 0.02-2 Gew.-%, eines dichroitischen Farbstoffes, der in Form der freien Säure der Formel 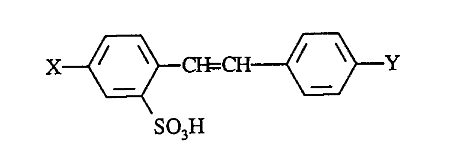 entspricht, in der
X, Y -N=N-R, -CF₃, -CONH₂, -CONHR¹, -CONR¹R², -COOH, -COOR¹, -CN, -NH₂, -NHR¹, -NR¹R², -OH, -OR¹, -NHCOR¹, Halogen, -OCOR₁, NO₂ oder einen gegebenenfalls substituierten heterocyclischen Rest,
R einen Aryl- oder heterocyclischen Rest, vorzugsweise den Rest einer carbocyclisch aromatischen oder heterocyclischen Kupplungskomponente, vorzugsweise der Benzol-, Naphthalin- oder Pyrazolon-Reihe
und
R¹, R² gegebenenfalls durch O und/oder S unterbrochenes Alkyl, Cycloalkyl, Aryl oder Aralkyl, wobei die für R, R¹ und R² genannten Reste substituiert sein können, bezeichnen, mit der Maßgabe, daß wenigstens ein Rest X oder Y eine Gruppe der Formel -N=N-R ist,
(D) 0.5-50 Gew.-% einer oder mehrerer Verbindungen aus der Reihe Glycerin, Ethylenglykol, Trimethylolethan, Trimethylolpropan, Tetramethylolethan, Sorbit, Mannit, Diethylenglykol, Triethylenglykol, Ethylenglykolmono- und -dimethylether, Ethylenglykolmono- und diethylether, Diethylenglykolmono- und -dimethylether, Diethylenglykolmono- und diethylether, Propanolamin, Ethanolamin, N,N-Dimethylformamid, Acetamid, N-Methylpyrrolidon, Pyrrolidon, ε-Caprolactam, Methanol, Ethanol, Propanol, wobei bei Verwendung von Glycerin allein das Gewichtsverhältnis Glycerin : Vinylalkoholpolymer etwa 0.2-1:1 beträgt.

2. Gießlösungen gemäß Anspruch 1, enthaltend (A) 40-75 Gew.-% Wasser.

3. Gießlosungen gemäß Anspruch 1 oder 2, enthaltend (B) 4-30 Gew.-% Vinylalkoholpolymer.

4. Gießlösungen gemäß einem oder mehreren der Ansprüche 1 - 3, enthaltend (C) 0,02-2 Gew.-% dichroitischen Farbstoff.

5. Gießlösungen gemäß einem oder mehreren der Ansprüche 1-4, enthaltend ein Glycerin-DMF-, Glycerin-Methanol-, Glycerin-Ethylenglykolmonomethylether- oder Glycerin-Ethylenglykoldimethylether-Gemisch.

6. Gießlösungen gemäß einem oder mehreren der Ansprüche 1-5, enthaltend einen Polyvinylalkohol, der in wäßriger Lösung eine Viskosität > 4 m Pa.sec² bei 20°C aufweist.

7. Gießlösungen gemäß einem oder mehreren der Ansprüche 1-6, enthaltend einen Polyvinylalkohol, der durch Verseifung von Polyvinylacetat hergestellt worden ist und einen Verseifungsgrad > 80 Mol-% aufweist.

## Claims

1. Casting solutions for the production of light-polarizing films or foils containing, based on the sum total of the weights of (A) + (B) + (C) + (D) = 100% by weight,
(A) 30 to 95% by weight and preferably 40 to 75% by weight of water,
(B) 1 to 40% by weight and preferably 4 to 30% by weight of vinyl alcohol polymer,
(C) 0.01 to 5% by weight and preferably 0.02 to 2% by weight of a dichroic dye which, in the form of the free acid, corresponds to the following formula: 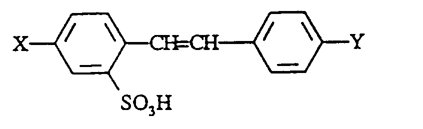 in which
X, Y represent -N=N-R, -CF₃, -CONH₂, -CONHR¹, -CONR¹R² -COOH, -COOR¹, -CN, -NH₂, -NHR¹, -NR¹R², -OH, -OR¹, -NHCOR¹, halogen, -OCOR₁, NO₂ or an optionally substituted heterocyclic radical,
R is an aryl or heterocyclic group, preferably the group of a carbocyclic aromatic or heterocyclic coupling component, preferably of the benzene, naphthalene or pyrazolone series
and
R¹, R² represent alkyl, cycloalkyl, aryl or aralkyl optionally interrupted by O and/or S, the groups mentioned for R, R¹ and R² optionally being substituted, with the proviso that at least one substituent X or Y is a group having the formula -N=N-R,
(D) 0.5 to 50% by weight of one or more compounds from the group consisting of glycerol, ethylene glycol, trimethylol ethane, trimethylol propane, tetramethylol ethane, sorbitol, mannitol, diethylene glycol, triethylene glycol, ethylene glycol monomethyl and dimethyl ether, ethylene glycol monoethyl and diethyl ether, diethylene glycol monomethyl and dimethyl ether, diethylene glycol monoethyl and diethyl ether, propanolamine, ethanolamine, N,N-dimethyl formamide, acetamide, N-methyl pyrrolidone, pyrrolidone, ε-caprolactam, methanol, ethanol, propanol; where glycerol is used on its own, the ratio by weight of glycerol to vinyl alcohol polymer is approximately 0.2-1:1.

2. Casting solutions as claimed in claim 1, containing (A) 40 to 75% by weight of water.

3. Casting solutions as claimed in claim 1 or 2 containing (B) 4 to 30% by weight of vinyl alcohol polymer.

4. Casting solutions as claimed in one or more of claims 1 to 3 containing (C) 0.02 to 2% by weight of dichroic dye.

5. Casting solutions as claimed in one or more of claims 1 to 4 containing a glycerol/DMF, glycerol/methanol, glycerol/ethylene glycol monomethyl ether or glycerol/ethylene glycol dimethyl ether mixture.

6. Casting solutions as claimed in one or more of claims 1 to 5 containing a polyvinyl alcohol which, in aqueous solution, has a viscosity of > 4 mPa.sec² at 20°C.

7. Casting solutions as claimed in one or more of claims 1 to 6 containing a polyvinyl alcohol which has been prepared by saponification of polyvinyl acetate and which has a degree of saponification of > 80 mol-%.

## Revendications

1. Solutions pour la fabrication par coulée de feuilles ou films polarisants contenant, rapportés à la somme des poids (A) + (B) + (C) + (D) = 100 % en poids, (A)-30-95 % en poids, de préférence 40-75 % en poids, d'eau, (B) 1-40 % en poids, de préférence 4-30 % en poids, d'alcool polyvinylique, (C) 0,01-5 % en poids, de préférence 0,02-2 % en poids, d'un colorant dichroïque, qui, sous la forme de l'acide libre, correspond à la formule 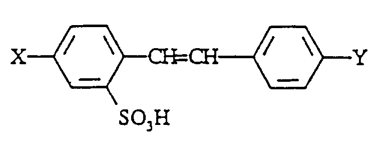 dans laquelle,
X, Y désignent -N=N-R, -CF₃, -CONH₂, -CONHR¹, -CONR¹R², -COOH, -COOR¹, -CN, -NH₂, -NHR¹, -NR¹R², -ON, -OR¹, -NHCOR¹, un halogène, -OCOR¹, NO₂
ou un radical hétérocyclique éventuellement substitué,
R désigne un radical aryle ou hétérocyclique, de préférence le radical d'un composant d'accouplement carbocyclique aromatique ou hétérocyclique, de préférence de la série du benzène, de la naphtaline ou de la pyrazolone
et
R¹, R² désignent un alkyle, cycloalkyle, aryle ou aralkyle interrompu éventuellement par O et/ou S, les radicaux cités pour R, R¹ et R² pouvant être substitués, à la condition qu'au moins un radical X ou Y soit un groupe répondant à la formule -N=N-R,
(D) 0,5-50 % en poids d'un ou plusieurs composés de la série glycérine, éthylèneglycol, triméthyloléthane, triméthylolpropane, tétraméthyloléthane, sorbitol, mannitol, diéthylèneglycol, triéthylèneglycol, éthylèneglycolméthyléther et éthylèneglycoldiméthtléther, éthylèneglycoléthyléther et éthylèneglycoldiméthtléther, diéthylèneglycolméthyléther et diéthylèneglycoldiméthyléther, diéthylèneglycoléthyléther et diéthylèneglycoldiéthyléther, propanolamine, éthanolamine, N,N-diméthylformamide, acétamide, N-méthylpyrrolidone, pyrrolidone, ε-caprolactame, méthanol, éthanol, propanol, dans le cas d'utilisation de glycérine seule, le rapport de poids glycérine:alcool polyvinylique étant d'environ 0,2-1:1.

2. Solutions selon la revendication 1, contenant (A) 40-75 % en poids d'eau.

3. Solutions selon la revendication 1 ou 2, contenant (B) 4-30 % en poids d'alcool polyvinylique.

4. Solutions selon l'une ou plusieurs des revendications 1 à 3, contenant (C) 0,02-2 % en poids de colorant dichroïque.

5. Solutions selon l'une ou plusieurs des revendications 1 à 4, contenant un mélange glycérine-DMF, glycérine-méthanol, glycérine-éthylèneglycolméthyléther ou glycérine-éthylèneglycoldiméthyléther.

6. Solutions de coulée selon l'une ou plusieurs des revendications 1 à 5, contenant un alcool polyvinylique, qui en solution aqueuse présente une viscosité > 4 mPa.s² à 20°C.

7. Solutions de coulée selon l'une ou plusieurs des revendications 1 à 6, contenant un alcool polyvinylique qui a été fabriqué par saponification d'acétate de polyvinyle et présente un degré de saponification > 80 % en moles.
